# EUROPÄISCHE PATENTSCHRIFT

(11) **EP 3 277 955 B1**
(45) Veröffentlichungstag und Bekanntmachung des Hinweises auf die Patenterteilung: **28.07.2021**
(21) Anmeldenummer: 16720988.1
(22) Anmeldetag: 30.03.2016
(51) Int. Cl.: F04B 23/02, F04B 23/06, F04B 15/02, F04B 49/06, B28B 11/04, B29C 44/18, E04C 1/41, C04B 38/10, C04B 111/00, C04B 30/00

(54) **VERFAHREN ZUM FÜLLEN VON HOHLRÄUMEN VON BAUSTEINEN**
METHOD FOR FILLING CAVITIES OF BRICKS
PROCÉDÉ POUR REMPLIR DE CAVITÉS DE BRIQUES

(30) Priorität: 31.03.2015 AT 500542015 U; 07.05.2015 DE 202015003366 U
(43) Veröffentlichungstag der Anmeldung: 07.02.2018
(73) Patentinhaber: Geolyth Mineral Technologie GmbH, 4050 Traun (AT)
(72) Erfinder: ENZENHOFER, Karl, 3352 St. Peter/ Au (AT)
(74) Vertreter: Burgstaller, Peter
(86) Internationale Anmeldenummer: PCT/AT2016/050085
(87) Internationale Veröffentlichungsnummer: WO 2016/154654

(56) Entgegenhaltungen:
- EP-A1- 0 038 552
- EP-A2- 0 146 529
- DE-A1- 2 740 269
- DE-U1-202014 100 309
- GB-A- 2 045 344
- US-A- 3 889 713

## Beschreibung

Die Erfindung betrifft ein Verfahren für das Füllen von Schäumen mit hohem Porenanteil insbesondere Mineralschäumen in Hohlräume, insbesondere in Hohlräume von Baustoffen beziehungsweise Bauelementen wie insbesondere Bausteinen.

Nach dem Stand der Technik sind Füllvorrichtungen zum Befüllen von Hohlräumen mit Schäumen bekannt, wobei nach dem Stand der Technik zumeist Kolbendosierer oder Kolbenpumpen für diesen Zweck Anwendung finden. Daneben wurden auch Schneckenförderer eingesetzt, welche jedoch einen negativen Einfluss auf die Schaumstabilität von Schäumen mit hohem Porenanteil zu haben scheinen.

Jeder Kolbendosierer bzw. jede Kolbenpumpen weist einen Behälter zur Aufnahme von Schaummaterial sowie ein Füllelement zum Einführen des Schaumaterials in einen Hohlraum, einen Kolbenzylinder zum Fördern des Schaummaterials vom Behälter zum Füllelement und ein Ventilelement, mit dem wahlweise eine Kommunikation zwischen dem Behälter und dem Kolbenzylinder sowie dem Kolbenzylinder und dem Füllelement herstellbar ist, auf. Jeder Kolbendosierer bzw. jede Kolbenpumpe ist daher bekanntermaßen zum Befüllen von Hohlräumen mit Schaummaterial geeignet.

Die EP 0038552 A1 zeigt eine Füllanlage zum Füllen von Formen mit Schaummaterial zur Herstellung von Mauersteinen. Das Schaummaterial wird mit einem wie zuvor beschriebenen Kolbendosierer in die Form eingebracht. Nachteilig ist, dass die Vorrichtung nicht flexibel an unterschiedliche zu befüllende Formen oder Hohlräume angepasst werden kann, sowie eine eventuelle Expansion des Schaummaterials nicht berücksichtigt ist.

Die GB 2045344 A zeigt eine Füllanlage zum Füllen von Hohlräumen mit Schaummaterial mit einer wie zuvor beschriebenen Kolbenpumpe. Nachteilig ist, dass die Vorrichtung nicht flexibel an unterschiedliche zu befüllende Formen oder Hohlräume angepasst werden kann, sowie eine eventuelle Expansion des Schaummaterials nicht berücksichtigt ist.

Die EP0146529A2 zeigt eine Vorrichtung zum Füllen von Mauersteinen, wobei je Mauersteine nur eine Dosiervorrichtung mit einer Dosierpumpe und einem Abfüllstutzen vorhanden ist. Die Mauersteine müssen derart ausgebildet sein, dass diese nur einen Hohlraum aufweisen, was dadurch erreicht wird, dass alle Öffnungen des Bausteins durch Verbindungskanäle verbunden sind. Das eingefüllte Material muss daher relativ flüssig sein, daher entsprechend einem pumpbaren Flüssigbeton vorliegen. Schaummaterial mit hohem Porenanteil würde sich aufgrund der hohen Viskosität mit der Vorrichtung der EP0146529A2 wohl nicht befüllen lassen. Auf die Art der Dosierpumpe wird in der EP0146529A2 nicht eingegangen, wobei zum Pumpen von Flüssigbeton üblicherweise Kolbenpumpen eingesetzt werden. Nachteilig ist, dass die Vorrichtung nicht flexibel an unterschiedliche zu befüllende Formen oder Hohlräume angepasst werden kann.

Die DE 202014100309 U1 zeigt eine Vorrichtung zum Füllen von Mauersteinen mit mehreren zuvor beschriebenen Kolbendosierern bzw. Kolbenpumpen. Nachteilig ist wiederum, dass die Vorrichtung nicht rasch flexibel an unterschiedliche zu befüllende Mauersteine oder Hohlräume angepasst werden kann, sowie eine eventuelle Expansion des Schaummaterials nicht berücksichtigt ist. Diese Vorrichtung ist somit nur für formstabile Schäume geeignet.

Es wurde jedoch festgestellt, dass bei besonders empfindlichen Schäumen, wie insbesondere bei sehr rasche aushärtenden Mineralschäumen mit hohem Porenanteil, die nach dem Stand der Technik bekannten Vorrichtungen weniger geeignet sind. Solche Schäume mit hohem Porenanteil sind vorteilhaft, da der Wärmedämmwert des Mineralschaumes mit steigendem Porenanteil zunimmt. Insbesondere wurde festgestellt, dass die Schäume mit hohem Porenanteil beim Austrag mit Kolbenzylindern etwas komprimiert werden, wodurch sich die Poren des Schaums danach wieder ausdehnen, was zu einer Erhöhung des Schaumvolumens führt. Ist am Kolbenzylinder ein Schlauch angeschlossen, welcher bis zum zu befüllenden Hohlraum führt, kommt es nach Ende des Füllvorgangs dazu, dass sich der im Schlauch befindliche Schaum ausdehnt und so Schaum aus dem Schlauch gedrückt wird. Zudem haben die bekannten Vorrichtungen den Nachteil, dass diese nicht oder nicht rasch auf unterschiedliche zu befüllende Bauelemente angepasst werden können, welche eine unterschiedliche Anzahl von Hohlräumen oder Hohlräume mit unterschiedlichem Volumen aufweisen. In der DE 202014100309 U1 ist dazu angeführt, dass die Anzahl der Ventilelemente, Zylinderkolben und Schläuche der Vorrichtung in Abhängigkeit des zu füllenden Hohlziegels gewählt werden, was je zu füllender Art von Hohlziegel eine eigene Füllanlage erforderlich macht, oder ein aufwändiges Umrüsten der bestehenden Anlage erfordert.

Die der Erfindung zu Grunde liegende Aufgabe besteht darin, ein Verfahren bereit zu stellen, welches eine exakte, sparsame und schonende Abfüllung von rasch aushärtenden Schäumen mit hohem Porenanteil ermöglicht.

Für das Lösen der Aufgabe wird ein Verfahren gemäß Anspruch 1 vorgeschlagen.

Dazu wird eine Füllanlage verwendet, umfassend einen Behälter, welcher zumindest teilweise mit Schaum gefüllt ist und mehrere Öffnungen aufweist, wobei die Öffnungen über Leitungen zu einem Füllelement führen, welches mehrere Füllstutzen aufweist, derart auszugestalten, dass jede zwischen den Öffnungen des Behälters und dem Füllelement verlaufende Leitung eine Pumpe in Form einer Kolben-, Drehkolben-, Zahnrad-, Sinus- oder Schlauchpumpe aufweist, wobei im Fall von Kolbenpumpen die offenen Enden der Kolbenzylinder über ein gemeinsames translatorisch verschiebbares Weichenelement in zeitlich aufeinanderfolgenden Schritten entweder mit dem Behälter und mit dem Füllelement verbindbar sind, wobei jede Kolben-, Drehkolben-, Zahnrad-, Sinus- oder Schlauchpumpe unabhängig von den anderen ansteuerbar ist, sodass die Parameter jeder einzelnen Pumpe an den jeweils zu füllenden Hohlraum oder sonstige Bedingungen anpassbar sind.

Bevorzugt wird weiters vorgeschlagen, dass Auslassende der Füllvorrichtung verschließbar zu machen.

Bevorzugt wird weiters vorgeschlagen, die Komponenten der Füllanlage rasch demontieren zu können, indem das wahlweise Verbinden der Kolbenzylinder mit dem Behälter und dem Materialauslass über ein gemeinsames Weichenelement erfolgt, welches bei Bedarf aus der Vorrichtung entnommen werden kann. Bevorzugt ist das Weichenelement eine Platte, welche pro Kolbenzylinder zwei Öffnungen aufweist, wobei am Kolbenzylinder ein v- oder Y-Förmiges Rohrstück anschließt, dessen erster Schenkel eine Verbindung zum Behälter und dessen zweiter Schenkel eine Verbindung zum Auslassende ermöglicht, wobei in einer ersten Stellung der Platte die erste Öffnung der Platte den Weg über den ersten Schenkel zu einer Leitung in den Behälter freigibt und in einer zweiten Stellung die zweite Öffnung der Platte den Weg über den zweiten Schenkel des Rohrstücks in eine Leitung zum Füllelement freigibt. Vorteilhaft daran ist, dass die Vorrichtung keine rotierenden Ventil-Elemente aufweist, welche in der Regel schwierig zu demontieren bzw. zu reinigen sind.

Bevorzugt ist im Schaumbehälter ein Rührelement angebracht, welches den Schaum in Bewegung hält und eine gleichmäßige Verteilung des Schaums am Boden des Behälters gewährleistet.

Für das erfindungsgemäße Verfahren zum exakten Füllen von Hohlräumen mit Schaummaterial mit hohem Porenanteil wird vorgeschlagen, dass für jeden zu füllenden Hohlraum ein Kolbenzylinder vorhanden ist, welcher durch einen Servomotor angetrieben wird und dessen Hubvolumen und Geschwindigkeit über den Servomotor gesteuert wird, dass für alle Kolbenzylinder ein gemeinsames Weichenelement vorhanden ist, durch welches die Kolbenzylinder wahlweise mit dem Behälter des Schaummaterials oder dem Auslassende, an welchem das Schaummaterial in die Hohlräume gefüllt wird, verbunden werden, wobei je ein Kolbenzlinder über eine Förderleitung in einen Hohlraum fördert und das Auslassende der Förderleitungen gemeinsam durch ein Absperrelement verschlossen werden, wobei das Hubvolumen und die Geschwindigkeit der Kolbenzylinder derart eingestellt wird, dass alle Hohlräume unabhängig von ihrem Volumen in der selben Zeit gefüllt werden und nach erfolgter Füllung das Absperrelement alle Auslassenden simultan verschließt und das gemeinsame Weichenelement alle Kolbenzylinder simultan vom Auslassende trennt und mit dem Schaumbehälter verbindet.

In einer alternativen Ausgestaltung der Erfindung werden anstelle der Zylinderkolben zur Schaumbeförderung Drehkolbenpumpen oder Zahnradpumpen verwendet. Diese Pumpen zeichnen sich dadurch aus, dass das geförderte Volumen in der Pumpe nicht komprimiert wird und die Pumpen eine kleine Baugröße aufweisen.

In einer alternativen Ausgestaltung der Erfindung werden anstelle der Zylinderkolben zur Schaumbeförderung Sinuspumpen verwendet, diese eignen sich zur besonders schonenden, pulsationsarmen Förderung von Schäumen mit großen, stückigen Anteilen und auch mit scherempfindlichen Inhaltsstoffen.

In einer alternativen Ausgestaltung der Erfindung werden anstelle der Zylinderkolben zur Schaumbeförderung Schlauchpumpen verwendet. Diese Pumpen zeichnen sich dadurch aus, dass die mechanischen beweglichen Komponenten der Schlauchpumpe nicht mit dem zu fördernden Schaum in Berührung kommen.

Die Drehkolbenpumpe, Sinus-, Zahnradpumpe und Schlauchpumpe haben den Vorteil, dass diese im Gegensatz zu Zylinderkolbenpumpe, kontinuierlich fördern können, sodass die Stillstandzeit zwischen der Füllung der Hohlräume von aufeinanderfolgenden Baustoffen wie Mauersteinen deutlich geringer ausfällt.

Erfindungsgemäß kann die Geschwindigkeit (Drehzahl) der einzelnen Pumpen gesteuert werden, um das geförderte Volumen pro Zeiteinheit je Pumpe einstellen zu können, sodass der Füllvorgang für alle zu füllende Hohlräume zeitgleich beendet wird. Ist der Füllvorgang abgeschlossen, werden alle Pumpen zeitgleich abgestellt und das Auslassende bevorzugt verschlossen.

Besonders bevorzugt umfasst das erfindungsgemäße Verfahren zudem eine Steuerung bzw. Regelung der Zylinderkolben bzw. der Pumpen, welche auf Basis der Materialzusammensetzung und Eigenschaften des Schaums, wie insbesondere Dichte und Porengröße und/oder Umgebungsbedingungen wie Temperatur, Luftdruck, Luftfeuchtigkeit die Parameter der Zylinderkolben, also Hub und Geschwindigkeit oder die Drehzahl der Drehkolben-, Zahnrad- oder Schlauchpumpe steuert oder regelt.

Besonders bevorzugt wird die Füllmenge bzw. der Füllstand des Schaumes in den Hohlräumen erfasst und die Zylinderkolben- bzw. Pumpenparameter in Abhängigkeit davon geregelt. Die Erfassung der Füllmenge bzw. des Füllstands kann dabei bereits laufend während der Füllung erfolgen oder nach beendeter Füllung erfolgen. Bevorzugt wird die Füllmenge bzw. der Füllstand bei Baustoffen mit mehreren Hohlräumen für jeden Hohlraum einzeln erfasst und die dem jeweiligen Hohlraum zugeordnete Kolbenzylindereinheit oder Pumpe in Abhängigkeit davon geregelt.

Sollte der Schaum nach Abfüllen im Hohlraum eine Expansion erfahren, so wird die Füllmenge, bzw. der Füllstand bevorzugt nach beendeter Expansion erfasst, sodass exakt die benötigte Menge Schaum eingebracht werden kann, was zu einem minimalen Verbrauch des Schaummaterials führt.

Besonders bevorzugt liegen die Baustoffe in Form von vorgefertigten Elementen wie Bausteinen, insbesondere Hohlziegeln vor, welche auf einem Fließband zur gegenständlichen Anlage transportiert werden.

Besonders bevorzugt ist die Fülleinheit, welche die Auslassenden der erfindungsgemäßen Anlage aufnimmt, am Arm eines Industrieroboters befestigt, wobei besonders bevorzugt die Fülleinheit während des Abfüllvorgangs mit dem Förderband mit bewegt wird, sodass die Baustoffe am Förderband mit einer konstanten Geschwindigkeit transportiert werden können. Dadurch werden Beschleunigungsvorgänge des Fließbands vermieden, was insbesondere einen geringeren Energieverbrauch zur Folge hat. Besonders bevorzugt wird die Lage der Baustoffe am Förderband sensorisch erfasst, sodass der Roboter diese zielgenau ansteuern kann.

Das erfindungsgemäßen Verfahren kann gegenüber dem Stand der Technik besonders vorteilhaft zum Abfüllen von mineralischen Schäumen mit einem hohen Porenanteil von zumindest 50 % insbesondere zumindest 70 % verwendet werden, da die Schaumstruktur erhalten bleibt und eine Ausdehnung des Schaums mit hohem Porenanteil durch die erfindungsgemäßen Maßnahmen unproblematisch wird.

Die Erfindung wird an Hand von Zeichnungen veranschaulicht:
Fig. 1: zeigt eine schematische Darstellung einer beispielhaften Anlage zur Umsetzung des erfindungsgemäßen Verfahrens in Ansicht von der Seite und von oben.
Fig. 2: die Fig. 2a-2d zeigen in schematischer Darstellung zwei beispielhafte Weichenelemente in jeweils zwei unterschiedlichen Stellungen.
Fig. 3: die Fig. 3a und 3b zeigen in schematischer Darstellung ein weiteres beispielhaftes Weichenelement.
Fig. 4: die Fig. 4a und 4b zeigen schematische Darstellungen von beispielhaften Anlagen mit Drehkolbenpumpe in Ansicht von der Seite.

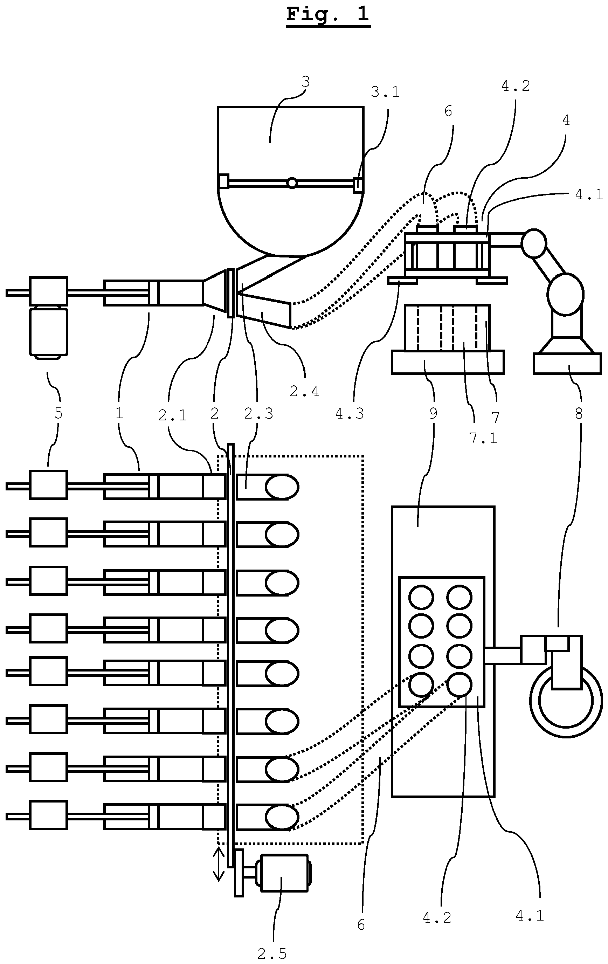

Die in Fig. 1 dargestellte Anlage weist acht Kolbenzylinder 1 auf, die mit ihren offenen Enden an einem Weichenelement 2 angeschlossen sind. Das Weichenelement 2 liegt in Form einer länglichen Platte vor, welche translatorisch zwischen zwei Stellungen verschiebbar ist. In der ersten Stellung gibt das Weichenelement 2 eine Verbindung vom offenen Ende des Kolbenzylinders 1 zum Behälter 3 frei. In der zweiten Stellung gibt das Weichenelement 2 eine Verbindung vom offenen Ende des Kolbenzylinders 1 zum Füllelement 4 frei.

Jeder Kolbenzylinder ist von einem Servomotor 5 angetrieben, wobei der Hub und/oder die Hubgeschwindigkeit des Kolbenzylinders 1 über den Servomotor 5 gesteuert bzw. geregelt wird. Im Behälter 3 ist ein Rührelement 3.1 angeordnet, welches den Schaum in Bewegung hält und diesen gleichmäßig zu den Öffnungen im Behälter, welche über das Weichenelement 2 zu den Kolbenzylindern 1 führen, verteilt. Besonders vorteilhaft ist das Rührelement 3.1 in Kontakt mit der Innenwand des Behälters 3, um daran anhaftendes Material zumindest einmal pro Umdrehung weg zu bewegen, um ein Aushärten des Schaummaterials an der Behälterwand zu verhindern.

Der Kolbenzylinder 1 liegt vorzugsweise nicht direkt mit seinem offenen Ende am Weichenelement 2 an, sondern über ein trichterförmiges oder Y-förmiges Zwischenstück 2.1, welches an der dem Kolbenzylinder 1 zugewandten Seite eine kreisrunde Öffnung aufweist und an der den Öffnungen 2.2 des Weichenelements 2 zugewandten Seite eine ovale Öffnung, oder zwei kreisrunde Öffnungen aufweist. An der dem Zwischenstück 2.1 gegenüberliegenden Seite des Weichenelements 2, verläuft die Behälterleitung 2.3 vom Weichenelement 2 zum Behälter 3 und die Auslassleitung 2.4 vom Weichenelement 2 zum Füllelement 4. Das Weichenelement 2 kann bevorzugt, wenn es vom Antrieb 2.5 entkoppelt wird, aus der Vorrichtung herausbewegt werden. Bevorzugt können die Kolbenzylinder 1, vorzugsweise mitsamt der Zwischenstücke 2.1 von der Behälterleitung 2.3 und der Auslassleitung 2.4 wegbewegt werden, um sowohl die Kolbenzylinder 1 als auch die Leitungen für eine gründliche Reinigung oder Wartung zugänglich zu machen. Dazu können die Kolbenzylinder 1 oder die Zwischenstücke 1.1, bzw. jene Anlagenkomponente welche diese aufnimmt, über ein Schnellverschlusssystem, insbesondere Spannhebel, mit der die Leitungen 2.3, 2.4 aufnehmenden Anlagenkomponente verbunden sein. Zwischen Auslassleitung 2.4 und dem Füllelement 4 befindet sich bevorzugt ein Schlauch 6, welcher eine Relativbewegung des Füllelements 4 gegenüber den zuvor beschriebenen Anlageteilen ermöglicht.

Das Füllelement 4 weist einen Träger 4.1 auf, an welchem die an den Schläuchen 6 angeschlossenen Auslassenden, die bevorzugt in Form von Füllstutzen 4.2 ausgeführt sind, in einer den Hohlräumen 7.1 des Bausteins 7 entsprechenden Anordnung fixiert sind. Die Füllstutzen 4.2 können bevorzugt vor Beginn des Füllvorgangs automatisiert in die Hohlräume 7.1 eingeführt werden und während des Füllens aus diesen herausbewegt werden. Ist der Füllvorgang beendet, werden die Füllstutzen 4.2 durch ein Verschlusselement 4.3, beispielsweise in Form eines oder mehrerer Schieber, verschlossen.

Bevorzugt kann die Anordnung der Füllstutzen 4.2 im Träger 4.1 je nach zu befüllendem Baustein 7 geändert werden. Besonders bevorzugt kann der Träger 4.1 samt Füllstutzen 4.2 getauscht werden, sodass für jede Form der von der Anlage zu befüllenden Bausteine 7 die entsprechende Füllstutzenanordnung verwendet werden kann. Dazu sind die Schläuche 6 vorzugsweise mit einem Schnellverschlusssystem, wie insbesondere Spannhebel, an den Füllstutzen 4.2 befestigt, um ein rasches Umrüsten zwischen den Chargen unterschiedlicher Bausteine 7 zu ermöglichen. Besonders bevorzugt entspricht die Anzahl der Kolbenzylinder 1 der Anzahl an Hohlräumen 7.1 welche der zu befüllende Baustein mit den meisten Hohlräumen 7.1 aufweist. Zur Befüllung eines Bausteins 7 mit weniger Hohlräumen 7.1 ist vorgesehen, dass zwei Kolbendosierer 1 gemeinsam in einen Hohlraum 7.1, insbesondere in jenen mit dem größten Volumen, fördern, sodass weiter Material durch alle Leitungen bewegt wird. Sollen mit der Anlage laufend und nicht chargenweise unterschiedliche Bausteine 7 befüllt werden, so ist vorgesehen, dass das Umschalten von einem Befüllungsmuster auf ein anderes automatisiert erfolgt. Dazu kann das Füllelement 4 Umschaltelemente wie insbesondere 3-Wege-Ventile aufweisen, um die Verbindung eines Schlauches 6 zu unterschiedlichen Füllstutzen 4.2 zu ermöglichen. Das 3-Wege-Ventil kann auch vorteilhaft als Verschlusselement 4.3 genutzt werden, sodass einzelne Füllstutzen 4.2 auch gesperrt bleiben können, während die anderen einen Baustein 7 füllen. Beim folgenden Baustein 7 werden wieder alle Verschlusselemente 4.3 geöffnet, oder andere Verschlusselemente 4.3 gesperrt. Der der jeweils geschlossenen Leitung zugeordnete Kolbenzylinder 1 setzt für die Dauer des Füllungsvorgangs aus. Vorteilhaft daran ist, dass die Kolbenzylinder 1 nur für einen Füllvorgang still stehen, wodurch ein langes Verweilen des Schaummaterials in der Leitung unterbleibt.

Das Füllelement 4 wird von einem Roboter, vorzugsweise einem Industrieroboter 8 getragen.

Die Bausteine 7 werden bevorzugt durch das Förderband 9 relativ zur Füllanlage transportiert. Das Förderband 9 oder eine am Förderband unter dem Baustein 7 angeordnete Platte verschließt dabei die untenliegenden Öffnungen der Hohlräume 7.1. Die nicht dargestellte Platte ist notwendig, wenn der Baustein 7 (samt Platte) vom Förderband 9 genommen wird, bevor der Schaum ausreichend ausgehärtet ist, um nicht aus den Hohlräumen 7.1 zu fließen. Anstelle eines Bausteins 7 kann mit der Anlage ein beliebiger, Hohlräume aufweisender Baustoff, bzw. ein beliebiges, Hohlräume aufweisendes Bauelement gefüllt werden, beispielsweise Bauplatte, Fertigteile oder Rohrschalen.

Zudem kann die Anlage auch vorteilhaft dazu verwendet werden um Formen oder Schalungen zu füllen, insbesondere komplexe Formen, die eine Befüllung an mehreren Punkten oder von mehreren Seiten erforderlich machen, oder im Fall, dass mehrere Formen simultan befüllt werden sollen. Der mineralische Schaum bildet, falls die Form nach ausreichendem Aushärten des Schaums entfernt wird, selbst den Baustoff bzw. das Bauelement. Bevorzugt können in der Form bzw. im Hohlraum 7.1 wiederum Baustoffe, oder beliebige Elemente, wie beispielsweise Rohre, Schläuche oder Armierungen angebracht sein, welche vom mineralischen Schaum umschlossen werden und in ihrer Lage zueinander bzw. zum Hohlraum 7.1 fixiert werden.

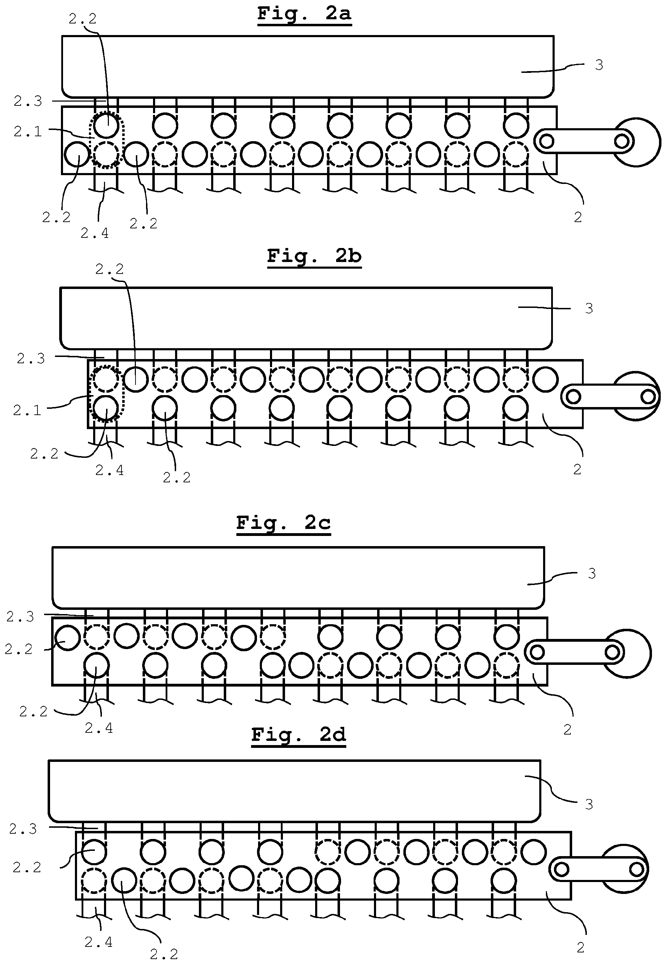

In den Fig. 2a und 2b ist ein beispielhaftes Weichenelement 2 gezeigt, welches als länglich Platte mit zwei parallelen zueinander versetzten Reihen von Öffnung 2.2 ausgeführt ist. Durch die versetzte Anordnung der Öffnungen 2.2 ist immer nur eine Reihe von Öffnung 2.2 in deckungsgleicher Lage mit den Behälterleitungen 2.3 oder den Auslassleitungen 2.4. In der ersten Endposition wie in Fig. 2a dargestellt, verbindet das Weichenelement 2 die Zwischenstücke 1.1 bzw. die Kolbenzylinder 1 mit den Behälterleitungen 2.3 und in der zweiten Endposition wie in Fig. 2b dargestellt, verbindet das Weichenelement 2 die Zwischenstücke 1.1 bzw. die Kolbenzylinder 1 mit den Auslassleitungen 2.4. Die Lage der Öffnung eines Zwischenstücks 1.1 ist in den Fig. 2a und 2b mit punktierter Linie dargestellt.

In den Fig. 2c und 2d ist ein Weichenelement 2 mit einem anderen Lochmuster gezeigt, bei welchem vier Kolbenzylinder 1 aus dem Behälter 3 ansaugen, während die anderen vier Kolbenzylinder 1 in die Auslassleitung 2.4 fördern. Prinzipiell kann über ein geeignetes Lochmuster und entsprechender Ansteuerung der Kolbenzylinder 1 eine beliebige Schaltung erreicht werden, die Anlage kann also durch das einfache Wechseln des Weichenelements 2 flexibel angepasst werden.

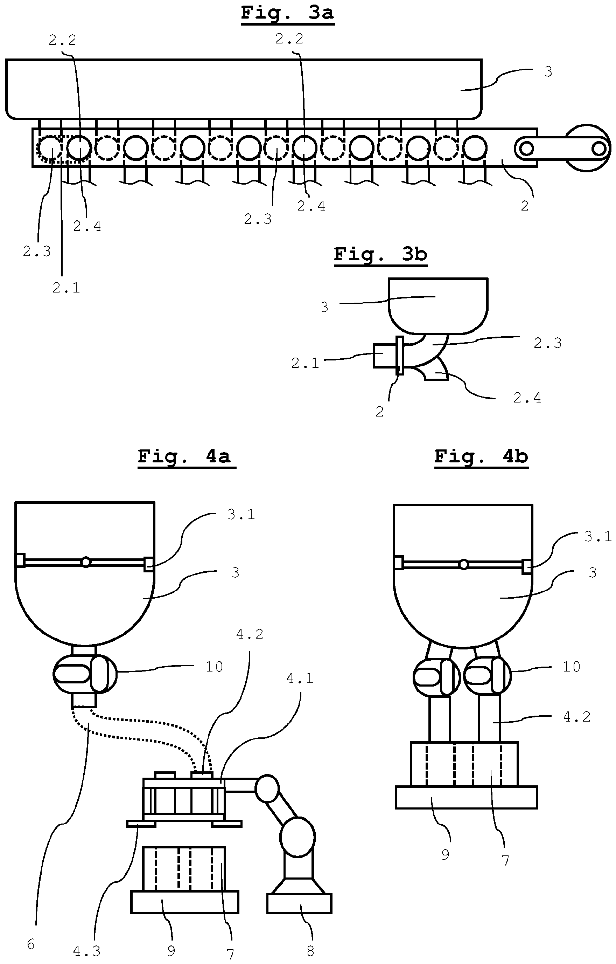

In den Fig. 3a und 3b ist eine alternative Ausgestaltung des Weichenelements 2 gezeigt, bei welcher nur eine Reihe von Öffnungen 2.2 benötigt wird, die jedoch voraussetzt, dass die Öffnungen der Behälterleitungen 2.3 und der Auslassleitungen 2.4 auf einer Linie liegen und vorzugsweise denselben Durchmesser aufweisen. Wie in Fig. 3b gezeigt, kann ein 90° Bogen vom Vorratsbehälter 3 zum als translatorischen Schieber ausgebildeten Weichenelement 2 und ein weiterer 90° Bogen vom Weichenelement 2 zum Füllstutzen 2.4 vorgesehen sein.

Wie in der alternativen Ausgestaltung der Anlage gemäß Fig. 4 veranschaulicht kann es vorteilhaft sein anstelle der Kolbenzylinder 1, Drehkolbenpumpen 10 bzw. Zahnradpumpen oder Schlauchpumpen zu verwenden. Diese Pumpen ermöglichen das kontinuierliche Fördern von Schaum, wobei die Notwendigkeit eines Weichenelements entfällt.

Wie in Fig. 4a gezeigt ist die Drehkolbenpumpe 10 mit ihrem Einlassende am Boden des Behälters 3 angeschlossen und am Auslassende der Drehkolbenpumpe 10 ist der Schlauch 6 befestigt. Pro zu füllendem Hohlraum 7.1 ist vorteilhaft zumindest eine Drehkolbenpumpe 10 vorhanden, wobei diese bei unterschiedlicher Hohlraumgröße mit unterschiedlicher Drehzahl betrieben werden, oder unterschiedlich dimensioniert sind. Um die Förderung zu stoppen wird die Drehkolbenpumpe 10 gestoppt. Das Füllelement 4 kann wie zu Fig. 1 beschrieben ausgeführt sein und vorteilhaft über ein Verschlusselement 4.3 und/oder Umschaltelemente verfügen. Alternativ ist es natürlich möglich auch eine geringere Anzahl an Pumpen bzw. Schläuchen 6 und/oder Füllstutzen 4.2 vorzusehen, als die maximale Anzahl von Hohlräumen 7.1 die ein zu befüllender Baustein 7 aufweist. Beispielsweise kann so ein Hohlraum 7.1 nach dem anderen gefüllt werden, bzw. eine Teilgruppe von Hohlräumen 7.1 nach der anderen. Der Roboter, welcher das Füllelement 4 trägt, kann dabei beispielsweise als zumindest ein Portalroboter ausgeführt sein, welcher die Füllstutzen 4.2, gegebenenfalls unabhängig zueinander, in einer Ebene parallel zum Förderband 9 in zumindest einer Achse, vorzugsweise zwei Achsen positionieren kann.

Denkbar ist jedenfalls auch eine Füllvorrichtung ohne Industrieroboter 8, dieser könnte einerseits durch einen oder mehrere Linearantriebe ersetzt werden, anderseits ist auch eine Vorrichtung ohne ein bewegliches Füllelement 4 möglich.

Bei exakter Positionierung der zu befüllenden Elemente auf dem Förderband 9 kann das Füllelement 4 auch stationär über diesem angeordnet sein. In diesem Fall werden nicht zwingend Schlauchleitungen 6 benötig. Eine solche Anlage ist beispielhaft in Fig. 4b abgebildet. Anstelle der dargestellten Drehkolbenpumpen kann auch eine andere Pumpe, insbesondere die hierin genannten, Verwendung finden. Die Abfüllstutzen 4.2 können auch bei dieser Ausgestaltung über flexible Schläuche 6 mit den Pumpen 10 verbunden sein, um die Abfüllstutzen 4.2, unabhängig von den übrigen Bauteilen und gegebenenfalls voneinander, in die zu füllenden Öffnungen 7.1 absenken zu können.

## Patentansprüche

1. Verfahren zum Füllen von Hohlräumen (7.1) insbesondere jenen eines Baustoffs, Bauelements oder Bausteins (7) mit einem Schaummaterial, insbesondere einem Mineralschaum mit hohem Porenanteil, mit einer Vorrichtung umfassend einen Behälter (3), welcher zumindest teilweise mit dem zu verfüllenden Material gefüllt ist und mehrere Öffnungen aufweist, wobei die Öffnungen über Leitungen zu einem Füllelement (4) führen, welches Füllstutzen (4.2) aufweist, wobei jede zwischen den Öffnungen des Behälters (3) und dem Füllelement (4) verlaufende Leitung eine Pumpe vorzugsweise in Form einer Kolben-, Drehkolben-, Zahnrad-, Sinus- oder Schlauchpumpe aufweist, wobei jede Pumpe unabhängig von den anderen ansteuerbar ist, **dadurch gekennzeichnet, dass** die Drehzahl jeder einzelnen Pumpe, oder im Fall von Kolbenpumpen die Geschwindigkeit jedes Kolbenzylinders (1), in Abhängigkeit des von der jeweiligen Pumpe zu füllenden Hohlraums (7.1) gesteuert, bzw. geregelt wird wobei die einzelnen Pumpen derart gesteuert oder geregelt werden, dass jeder Hohlraum (7.1) unabhängig von seinem Volumen in der selben Zeit gefüllt wird, wobei die Füllstutzen (4.2) simultan nach beendeter Füllung durch ein Verschlusselement (4.3) verschlossen werden.

2. Verfahren nach Anspruch 1, **dadurch gekennzeichnet, dass** die Parameter der Pumpen aufgrund von sensorisch erfassten Werten ausgewählt aus Schaumdichte, Porengröße, Porenanteil, Umgebungstemperatur oder Luftdruck geregelt werden.

3. Verfahren nach einem der Ansprüche 1 bis 2, **dadurch gekennzeichnet, dass** das Füllvolumen oder der Füllstand des Schaums in den Hohlräumen (7.1) messtechnisch erfasst wird und die Drehzahl, oder im Fall von Kolbenpumpen die Geschwindigkeit der einzelnen Pumpen in Abhängigkeit des Füllstands gesteuert oder geregelt werden.

4. Verfahren nach einem der Ansprüche 1 bis 3, **dadurch gekennzeichnet, dass** für jeden zu füllenden Hohlraum (7.1) ein Kolbenzylinder (1) vorhanden ist, welcher durch einen Servomotor (5) angetrieben wird und dessen Hubvolumen und Geschwindigkeit über den Servomotor (5) gesteuert wird, dass für alle Kolbenzylinder (1) ein gemeinsames Weichenelement (2) vorhanden ist, durch welches die Kolbenzylinder (1) wahlweise mit dem Behälter (3) des Schaummaterials oder dem Auslassende, an welchem das Schaummaterial in die Hohlräume (7.1) gefüllt wird, verbunden werden, wobei je ein Kolbenzlinder (1) über eine Förderleitung in einen Hohlraum (7.1) fördert und das Auslassende der Förderleitungen gemeinsam durch ein Absperrelement verschlossen werden, wobei das Hubvolumen und die Geschwindigkeit der Kolbenzylinder (1) derart eingestellt wird, dass alle Hohlräume (7.1) unabhängig von ihrem Volumen in der selben Zeit gefüllt werden und nach erfolgter Füllung das Absperrelement alle Auslassenden simultan verschließt und das gemeinsame Weichenelement (2) alle Kolbenzylinder (1) simultan vom Auslassende trennt und mit dem Schaumbehälter (3) verbindet.

## Claims

1. A method for filling cavities (7.1), in particular that of a building material, building element, or building block (7), with a foam material, in particular a mineral foam with high pore content, using a device comprising a container (3), which is at least partly filled with the material to be filled and has several openings, wherein the openings, via lines, lead to a filling element (4), which has filling nozzles (4.2), wherein each line running between the openings of the container (3) and the filling element (4) has a pump preferably in the shape of a piston pump, rotary piston pump, gear pump, sinusoidal pump, or peristaltic pump, wherein each pump is actuatable independently of the others, **characterised in that** the rotational speed of each pump, or, in the case of piston pumps, the speed of each piston cylinder (1), is controlled or adjusted according to the cavity (7.1) to be filled by the respective pump, wherein the individual pumps are controlled or adjusted such that each cavity (7.1) is filled in the same time regardless of its volume, wherein the filling nozzles (4.2) are sealed simultaneously by a sealing element (4.3) after the filling is completed.

2. The method of claim 1, **characterised in that** the parameters of the pumps are adjusted based on values detected by sensor, selected from foam density, pore size, pore content, ambient temperature, or air pressure.

3. The method of any one of claims 1 and 2, **characterised in that** the filling volume or filling level of the foam in the cavities (7.1) is detected metrologically and the rotational speed, or, in the case of piston pumps, the speed of the individual pumps, is controlled or adjusted in dependence on the filling level.

4. The method of any one of claims 1 to 3, **characterised in that** a piston cylinder (1), which is driven by a servo motor and the capacity and speed of which is controlled via the servo motor (5), is present for each cavity (7.1) to be filled, **in that** for all piston cylinders (1) a common switch element (2) is present, by which the piston cylinders (1) are connected to the container (3) of the foam material or alternatively to the outlet end at which the foam material is filled into the cavities (7.1), wherein one piston cylinder (1) in each case conveys into a cavity (7.1) via a conveyor line and the outlet ends of the conveyor lines are sealed together by a locking element, wherein the capacity and speed of the piston cylinders (1) is set such that all cavities (7.1) are filled in the same time regardless of their volume and the locking element seals all outlet ends simultaneously, and the common switch element (2) separates and connects to the foam container (3) all piston cylinders (1) simultaneously.

## Revendications

1. Procédé de remplissage de cavités (7.1), en particulier celles d'un matériau de construction, d'un élément de construction ou d'un bloc de construction (7), avec un matériau en mousse, en particulier une mousse minérale à haute teneur en pores, avec un dispositif comprenant un récipient (3) rempli au moins partiellement du matériau de remplissage et présentant une pluralité d'ouvertures, les ouvertures menant par des conduites à un élément de remplissage (4) qui présente des buses de remplissage (4. 2), chaque conduite s'étendant entre les ouvertures du récipient (3) et l'élément de remplissage (4) comportant une pompe, de préférence sous la forme d'une pompe à piston, d'une pompe à piston rotatif, d'une pompe à engrenages, d'une pompe sinusoïdale ou d'une pompe tubulaire, chaque pompe pouvant être commandée indépendamment des autres, **caractérisé en ce que** la vitesse de rotation de chaque pompe individuelle ou, dans le cas de pompes à piston, la vitesse de chaque cylindre à piston (1), est commandée ou régulée en fonction de la cavité (7. 1) à remplir par la pompe respective, les pompes individuelles étant commandées ou régulées de telle sorte que chaque cavité (7.1) soit remplie dans le même temps indépendamment de son volume respectif, les buses de remplissage (4.2) étant fermées simultanément par un élément de fermeture (4.3) quand le remplissage a été terminé.

2. Procédé selon la revendication 1, **caractérisé en ce que** les paramètres des pompes sont contrôlés sur la base de valeurs détectées par des capteurs, choisies parmi la densité de la mousse, la taille des pores, la teneur en pores, la température ambiante ou la pression de l'air.

3. Procédé selon l'une quelconque des revendications 1 à 2, **caractérisé en ce que** le volume de remplissage ou le niveau de remplissage de la mousse dans les cavités (7.1) est détecté par mesure et la vitesse de rotation, ou dans le cas de pompes à piston la vitesse, des pompes individuelles est commandée ou régulée en fonction du niveau de remplissage.

4. Procédé selon l'une des revendications 1 à 3, **caractérisé en ce que**, pour chaque cavité (7.1) à remplir, il y a un cylindre à piston (1) qui est entraîné par un servomoteur (5) et dont la cylindrée unitaire et la vitesse sont commandées par le servomoteur (5), **en ce que**, pour tous les cylindres à piston (1), il y a un élément de commutation commun (2) au moyen duquel les cylindres à piston (1) sont reliés, au choix, au récipient (3) du matériau en mousse ou à l'extrémité de sortie à laquelle le matériau en mousse est versé dans les cavités (7.1), chaque cylindre de piston (1) transportant le matériau en mousse par une conduite de transport dans une cavité (7.1) et les extrémités de sortie des conduites de transport étant fermée conjointement par un élément de fermeture, la cylindrée et la vitesse des cylindres à piston (1) étant réglés de telle sorte que toutes les cavités (7.1) sont remplis en même temps indépendamment de leur volume et, après le remplissage, l'élément de fermeture ferme simultanément toutes les extrémités de sortie et l'élément de commutation commun (2) sépare simultanément tous les cylindres à piston (1) de l'extrémité de sortie et les relie au récipient du matériau en mousse (3).
